# EUROPÄISCHE PATENTSCHRIFT

(11) **EP 2 899 021 B1**
(45) Veröffentlichungstag und Bekanntmachung des Hinweises auf die Patenterteilung: **24.04.2019**
(21) Anmeldenummer: 15000131.1
(22) Anmeldetag: 19.01.2015
(51) Int. Cl.: B32B 21/02, B32B 21/06, B32B 29/00, E04B 1/74, E04C 2/24, E04C 2/296, B32B 7/12, B32B 29/02, E04B 1/90, E04D 13/16, E04B 1/84

(54) **Beschichtete Dämmplatte**
Coated insulation board
Panneau isolant revêtu

(30) Priorität: 27.01.2014 EP 14000276
(43) Veröffentlichungstag der Anmeldung: 29.07.2015
(73) Patentinhaber: Pavatex SA, 1701 Fribourg (CH)
(72) Erfinder: Kewitzki, Adam, 88299 Leutkirch (DE); Brombacher, Volker, 5644 Auw (CH)
(74) Vertreter: Nuss, Laurent

(56) Entgegenhaltungen:
- EP-A2- 2 594 703
- WO-A1-2013/026172
- DE-A1- 4 440 156
- DE-A1- 19 508 432
- DE-A1-102005 038 734
- DE-A1-102006 023 087
- "Steico Isorel standard Holzfaserplatte", , 4. Juni 2014 (2014-06-04), XP055121497, Gefunden im Internet: URL:http://www.steico.com/fileadmin/steico /content/pdf/Marketing/German/Product_info rmation/isorel/STEICOisorel_de_i.pdf [gefunden am 2014-06-04]
- "Steico Phaltex vielseitige, bitumierte Holzfaserplatte", , 4. Juni 2014 (2014-06-04), XP055121496, Gefunden im Internet: URL:http://www.steico.com/fileadmin/steico /content/pdf/Marketing/German/Product_info rmation/phaltex/STEICOphaltex_de_i.pdf [gefunden am 2014-06-04]

## Beschreibung

Die vorliegende Erfindung betrifft Dämmplatten aus Holzfaserplatten, die flächig mit Papier beschichtet sind; Bauelemente umfassend eine Vielzahl solcher Dämmplatten, Verfahren zur Herstellung dieser Dämmplatten und Bauelemente sowie die Verwendung solcher Dämmplatten und Bauelemente.

Dämmplatten aus Holzfaserplatten sind an sich bekannt. So beschreibt EP2594703 Dämmplatten nach dem Oberbegriff des Anspruch 1 mit Nut - Kamm Verbindungen die so eine leichte Montage ermöglichen und robuste Verbindungen sicherstellen. EP1247916 beschreibt Dammplatten deren Fasern eine spezifische Vorzugsrichtung aufweisen. Solche Dämmplatten zeigen eine verbesserte Abreisfestigkeit, sind jedoch schwierig Herstellbar. Die Weiterverarbeitung dieser Dämmplatten auf der Baustelle ist jedoch vergleichsweise aufwändig.

DE19508432 beschreibt Wand- und Deckenplatten aus einem Trägerblatt vergleichsweise hoher Dichte und geringer Dicke, welches mit einer Dekorfolie auf der einen Seite und einem Krafftpapier auf der anderen Seite versehen ist. Solche Platten werden nicht weiter auf der Dekorseite bearbeitet oder beschichtet; aufgrund der verwendeten Materialien zeigen diese Platten keine dämmenden Eigenschaften, können also nicht als "Dämmplatten" angesehen werden.

WO2013/026172 beschreibt eine Bauplatte umfassend eine stabilen holzbasierten Träger, wie OSB Platten, beidseitig kaschiert mit Papier. Diese Bauplatten weisen eine spezifische Permeabilität auf. Aufgrund der verwendeten Materialien zeigen diese Platten keine dämmenden Eigenschaften, können also nicht als "Dämmplatten" angesehen werden.

Eine Aufgabe der vorliegenden Erfindung ist daher die Bereitstellung von Dämmplatten und Bauelementen; insbesondere von Dämmplatten die einerseits leicht herstellbar sind und andererseits auf der Baustelle leicht weiter bearbeitet werden können

Die vorstehend umrissenen Aufgaben werden gemäss den unabhängigen Ansprüchen gelöst. Die abhängigen Ansprüche stellen vorteilhafte Ausführungsformen dar. Weitere vorteilhafte Ausführungsformen sind der Beschreibung und den Figuren zu entnehmen. Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein.

Die in der vorliegenden Erfindung verwendeten Begriffe werden im allgemein üblichen, dem Fachmann geläufigen Sinn verwendet. Sofern sich aus dem direkten Zusammenhang keine andere Bedeutung ergibt, haben die folgenden Begriffe dabei insbesondere die hier angegebene Bedeutung.

**"Holzfaserplatte"** (auch "Holzfaserdämmplatte" genannt) bezeichnet an sich bekannte Platten die typischerweise zu 80 - 95 Vol.-% aus Holzfasern, welche aus Sägeresten (Schwarten, Spreissel) und Hackschnitzeln gewonnen werden, bestehen. Holzfaserplatten können nach dem Nassverfahren oder nach dem Trockenverfahren hergestellt sein. Bevorzugt sind Holzfaserplatten, deren Holzfasern überwiegend oder ausschließlich von Nadelhölzern gewonnen werden. Holzfaserplatten weisen zwei paar Schnittkanten auf ("Kantenflächen") sowie eine Ober- und Unterseite, welche typischerweise nicht unterscheidbar sind ("Seitenflächen" bzw. "Flächen")
**"Klebstoff"** bezeichnet Materialien, welche Holzfaserplatten durch Flächenhaftung und innere Festigkeit, d.h. Adhäsions- und Kohäsionskräfte, verbinden können. Der Begriff umfasst Heissklebstoffe (d.h. Lösemittel freie Klebstoffe) und Kaltklebstoffe / (d.h. lösemittelhaltige Klebstoffe, wasserbasierte Klebstoffe und Dispersionsklebstoffe). Heissklebstoffe werden auch als Heissleim, Kaltklebstoffe werden auch als Kaltleim bezeichnet.

**"Papier"** bezeichnet die bekannten, aus Pflanzenfasern hergestellten flächigen Materialien. Diese sind mit Harzen (z.B. Kolophonium, Melaminharz) getränkt und ggf. mit mineralischen Füllstoffen versetzt. Das Flächengewicht von Papier kann in einem weiten Bereich liegen, geeignet im Zusammenhang mit dieser Erfindung sind Papiere mit einem Flächengewicht von 120-360 g/m2.

Die vorliegende Erfindung wird weiterhin durch die **Figuren** illustriert. **Fig. 1** zeigt eine Dämmplatte gemäss vorliegender Erfindung. **Fig. 2** zeigt eine weitere Dämmplatte gemäss vorliegender Erfindung, die Ausbildung von Nut und Kamm ist deutlich sichtbar. Fig. 3 zeigt ein Bauelement, die innenseitige Verkleidung eines Schrägdachs mit Trempel, aus den erfindungsgemässen Dämmplatten. Fig. 4 zeigt den schematischen Aufbau einer erfindungsgemässen Dämmplatte (1), aus Trägerplatte (2), erster und zweiter Beschichtung (3),(4).

In einem **ersten Aspekt** betrifft die Erfindung somit eine Dämmplatte (1), umfassend (d.h. enthaltend oder bestehend aus) eine Trägerplatte (2), eine erste Beschichtung (3) und eine zweite Beschichtung (4), wobei die Trägerplatte (2) eine Holzfaserplatte mit einer Dicke von 20 - 60 mm und eine Rohdichte von 160 - 250 kg/m3 ist; und die erste Beschichtung ein Papier mit einer Dicke von 0.1 - 1.6 mm und einem Flächengewicht von 120- 360 g/m2 ist; und die zweite Beschichtung ein Papier mit einer Dicke von 0.1 - 1.6 mm und einem Flächengewicht von 120- 360 g/m2 ist; und die erste und die zweite Beschichtung auf den gegenüberliegenden Flächen der Trägerplatte stoffschlüssig verbunden sind. Eine derartige Dämmplatte ist bspw. geeignet für die Erstellung von Wänden, Decken- und Dachverkleidungen sowie Mauern und Stützen; ist einfach herstell- und verarbeitbar und geeignet als Untergrund für das Anbringen von Putzbeschichtugen und/oder Anstrichen und/oder Fliesen. Insbesondere erleichtert die erfindungsgemässe Dämmplatte die Verarbeitung auf der Baustelle.

Vorteilhafte Merkmale und Ausführungsformen der erfindungsgemässen Dämmplatte es sollen nachstehend erläutert werden.

Der Begriff **Holzfaserplatte** wurde vorstehend erläutert; vorteilhaft werden solche Holzfaserplatten verwendet, welche der DIN-EN 13171 entsprechen. Die Dimensionen für geeignete Holzfaserplatten können in weiten Bereichen variieren und hängen unter anderem von produktionstechnischen Überlegungen ab. Geeignet sind Holzfaserplatten mit einer Dicke von 20 - 60 mm.

Die Dichten für geeignete Holzfaserplatten können in weiten Bereichen variieren und hängen unter anderem vom angestrebten Verwendungszweck ab. Geeignet sind Holzfaserplatten mit einer Rohdichte von 160 - 250 kg/m³. Solche Platten können nach bekannten Methoden hergestellt werden und nach an sich bekannten Methoden zu den erfindungsgemässen Dämmplatten verarbeitet werden.

In einer vorteilhaften Ausführungsform betrifft die Erfindung eine Dämmplatte wie hier beschreiben, wobei die Trägerplatte eine Rohdichte von 220 - 240 kg/m³ aufweist.

In einer vorteilhaften Ausführungsform betrifft die Erfindung eine Dämmplatte wie hier beschrieben, wobei die Trägerplatte (2)aus zwei oder drei vollflächig miteinander verleimten Holzfaserplatten besteht. Die für die hier beschriebene Trägerplatte verwendeten Holzfaserplatten können, müssen aber nicht, identisch sein.

Der Begriff **Papier** wurde vorstehend erläutert. Die Erfindung betrifft eine Dämmplatte wie hier beschreiben, wobei besagte Beschichtungen aus einem mit duroplastischem Harz getränkten Papier bestehen.

In einer vorteilhaften Ausführungsform betrifft die Erfindung eine Dämmplatte wie hier beschreiben, wobei besagte Beschichtungen aus einem Papier mit einem Flächengewicht von 240 - 260 g/m2 bestehen. In einer vorteilhaften Ausführungsform betrifft die Erfindung eine Dämmplatte wie hier beschreiben, wobei besagte Beschichtungen (2) und (3) aus dem gleichen Papier bestehen.

Der Begriff **Dämmplatte** ist allgemein bekannt; insbesondere betrifft er einen flächigen Formkörper mit zwei gegenüberliegenden Kantenpaaren und den Deckflächen welche mit der hier beschriebenen Beschichtung versehen sind.

Die Erfindung betrifft eine Dämmplatte wie hier beschreiben, wobei die erste und die zweite Beschichtung die Flächen der Trägerplatte vollständig bedecken. In einer vorteilhaften Ausführungsform betrifft die Erfindung eine Dämmplatte wie hier beschreiben, wobei die Dämmung eine WärmeDämmung ist ("Wärmedämmplatte"). Solche Dämmplatten haben typischerweise eine Wärmeleitfähigkeit von weniger als 0,05 bevorzugt weniger als 0.048, besonders bevorzugt weniger als 0.045 W/mK.

Bei der erfindungsgemässen Dämmplatte (1) sind die Trägerplatte (2), die erste Beschichtung (3) und die zweite Beschichtung (4) stoffschlüssig miteinander verbunden. Eine derartige stoffschlüssige Verbindung kann mittels einer Klebschicht zwischen Trägerplatte (2) und Beschichtung (3) bzw. (4) erzeugt werden.

In einer Ausgestaltung umfasst die Klebeschicht einen Schmelzklebstoff.

In einer alternativen Ausgestaltung umfasst die Klebeschicht einen Kaltklebstoff, insbesondere ausgewählt aus der Gruppe der lösungsmittelbasierten Klebstoffe, der wasserbasierten Klebstoffe und der Dispersionsklebstoffe. Besonders bevorzugt erfolgt die stoffschlüssige Verbindung mittels eines Dispersionsklebstoffes wie bspw. PVAC-Dispersionsklebstoff ("Weissleim"). Es hat sich überraschend gezeigt, dass die vorstehend definierten Papiere auf die vorstehend definierten Holzfaserplatten mittels Kaltleim zuverlässig aufkaschiert werden können. Dies widerspricht dem Vorurteil der Fachwelt, dass auf Holzfaserplatten mit geringer Dichte ein Papier mittels Kaltleim aufkaschiert werden kann. Dadurch ist es nunmehr möglich, einfach und preiswert herstellbare Dämmplatten zur Verfügung zu stellen, die auf der Baustelle direkt weiter verarbeitet werden können.

Die erfindungsgemässe Dämmplatte weist zur Verbindung mit weiteren Dämmplatten geeignete Kantenausgestaltungen ("**Profilierungen**") auf. Die Erfindung betrifft somit auch eine Dämmplatte wie hier beschrieben, welcher an seinen Schmalseiten mit formschlüssig ineinander greifenden Profilen versehen ist. Solche Profilierungen sind allgemein bekannt.

Die Herstellung solcher Profile ist an sich bekannt und kann nach gängigen mechanischen Bearbeitungsverfahren, z.B. spanabhebenden Verfahren, erzeugt werden.

Die Erfindung betrifft so mit eine Dämmplatte wie hier beschreiben, wobei zwei gegenüberliegende Kanten so ausgebildet sind, dass die eine mindestens eine Nut und die andere mindestens einen Kamm zum Eingriff in die Nut einer weiteren Dämmplatte aufweist.

In einer vorteilhaften Ausführungsform betrifft die Erfindung somit eine Dämmplatte wie hier beschreiben, dadurch gekennzeichnet, dass sie zwei Kanten mit Nuten und zwei Kanten mit Kämmen aufweist, wobei die beiden Kanten mit Nuten aneinander stossende Kanten sind und die Kanten mit Kämmen aneinander stossende Kanten sind. Vorteilhaft sind die Nuten und Kämme der Dämmplatten derart gestaltet, dass die Kämme der einen Dämmplatte in die Nuten einer identisch gestalteten Dämmplatte dichtend eingreifen können.

In einem **zweiten Aspekt** betrifft die Erfindung ein Verfahren zur Herstellung eine Dämmplatte wie hier beschrieben. Vorteilhafte Ausführungsformen und Merkmale dieses Aspektes sollen nachstehend erläutert werden.

Die Ausgangsmaterialien, Trägerplatte und Papier zur Beschichtung sind an sich bekannt und kommerziell erhältlich bzw. nach bekannten Verfahren herstellbar. Grundsätzlich erfolgt die Herstellung der erfindungsgemässen Dämmplatte, indem eine Trägerplatte bereitgestellt wird und deren Flächen stoffschlüssig mit Papier beschichtet werden.

In einer Ausgestaltung umfasst die Herstellung die nachstehend genannten Schritte (Variante A):
▪ Bereitstellen einer Trägerplatte (1);
▪ Aufkaschieren einer ersten Papierschicht (2) auf eine erste Fläche dieser Trägerplatte; nachfolgend
▪ Aufkaschieren einer zweiten Papierschicht (3) auf die gegenüberliegende Fläche der teilweise kaschierten Trägerplatte;
▪ ggf. Zuschneiden der zweiseitig kaschierten Trägerplatte;
▪ ggf. Erstellen eines Kantenprofils aus Nut und Kamm.

In einer alternativen Ausgestaltung umfasst die Herstellung die nachstehend genannten Schritte (Variante B):
▪ Bereitstellen einer Trägerplatte (1);
▪ Gleichzeitiges Aufkaschieren einer ersten Papierschicht (2) und einer zweiten Papierschicht (3) auf die gegenüberliegenden Flächen der Trägerplatte; nachfolgend
▪ ggf. Zuschneiden der zweiseitig kaschierten Trägerplatte;
▪ ggf. Erstellen eines Kantenprofils aus Nut und Kamm.

Die Herstellung von Holzfaserplatten kann nach an sich bekannten Methoden, bspw. dem Nassverfahren oder dem Trockenverfahren, erfolgen. Das Bereitstellen solcher Platten für einen kontinuierlichen oder diskontinuierlichen Prozess ist an sich bekannt.

Das Beschichten, insbesondere Aufkaschieren, von Holzwerkstoffen mit Papieren oder Folien ist an sich bekannt. Die Herstellung dieser Beschichtungen kann auf gängigen Maschinen, wie Flach-, Durchlauf, Quickstep - Doppelbandpressen sowie auf Rollen-, Heiss/Kalt- Kaschieranlagen erfolgen. Pressdruck und Verarbeitungstemperatur sind Abhängig vom verwendeten Klebstoff, Vorschub, sowie Press- / Verweilzeit und können in weiten Bereichen Variieren. Geeignete Parameter können vom Fachmann in einfachen Reihenversuchen ermittelt werden. Die Verarbeitungstemperatur liegt typischerweise bei über 20°C.Besonders geeignete Klebstoffe sind Kaltleime, bspw. aus der Gruppe der PVAC-Dispersionsklebstoffe.

Das Zuschneiden von Holzfaserplatten bzw. eines entsprechenden Plattenverbundes ist an sich bekannt und kann nach bekannten Methoden erfolgen.

Das Erstellen eines Kantenprofils (Nut und Kamm) ist an sich bekannt und kann nach bekannten mechanischen Bearbeitungsverfahren, bspw. durch spanabhebende Bearbeitung, erfolgen.

In einem **dritten Aspekt** betrifft die Erfindung die Verwendung der hier beschriebenen Dämmplatten sowie Bauelemente umfassend eine Vielzahl von Dämmplatten wie hier beschrieben und ggf. Verbindungsmaterial. Vorteilhafte Ausführungsformen und Merkmale dieses Aspektes sollen nachstehend erläutert werden.

Der Begriff "Bauelement" ist an sich bekannt und umfasst insbesondere Wände, Mauern, Stützen, Träger, Treppen von Bauwerken, sowie Teile davon. Somit betrifft die Erfindung Bauelemente, welche für die Erstellung von Gebäuden, insbesondere als tragende Wände, aussteifende Wände, nichttragende Wände, ausgestaltet sind, umfassend eine Vielzahl von Dämmplatten wie hier beschrieben und ggf. Verbindungsmaterial. Ferner betrifft die Erfindung Bauelemente wie hier beschrieben, welche als Aussenwand oder als Innenwand eines Gebäudes ausgestaltet sind. Eine "Wand" bezeichnet im Zusammenhang mit der vorliegenden Erfindung einen Baukörper in Form einer vertikalen Scheibe, deren Länge und Höhe deutlich größer ist als deren Dicke (insbesondere >5), insbesondere eine Gebäudewand, wie Außenwand und Innenwand.

Die Dämmplatten gemäss der hier beschriebenen Erfindung sind somit vielseitig anwendbar und können die bekannten Dämmplatten in praktisch allen Anwendungen ersetzen. Die Erfindung betrifft daher auch die Verwendung von Dämmplatten wie hier beschrieben (i) als innenseitige Verkleidung eines Schrägdachs; (ii) als Ver-kleidung einer Trennwand; (iii) als Verkleidung eines Trempels (Kniestocks); (iv) als Innendämmung der Aussenwand eines Gebäudes; (v) als Akustikplatte; (vi) als Basisplatte für den Holzausbau; (vii) als Sandwichplatte für den Fahrzeugbau, insbesondere als Platte für den Ausbau von Caravans und / oder geschlossenen Anhängern.

Die nachstehend genannten **Beispiele** dienen der weiteren Erläuterung der Erfindung; sie sollen die Erfindung in keiner Weise limitieren.

### 1. Beispiel: Herstellen einer beschichteten Dämmplatte

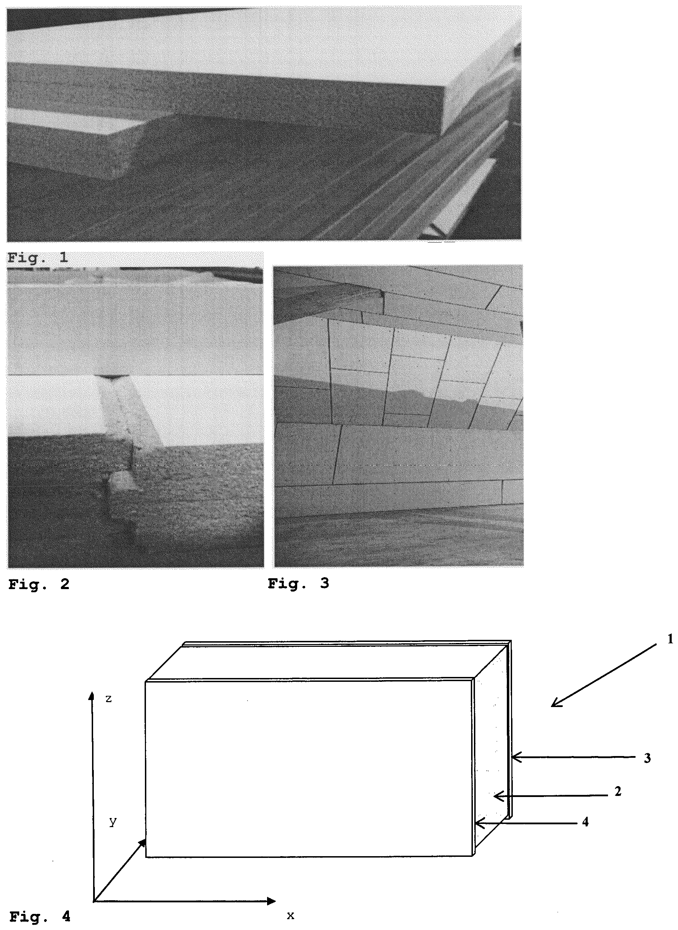

Eine Holzfaserplatte (Fa. Pavatex, Typ Isolair) mit einer Dicke von 30 mm und des Formates 2520 x 560 mm wird mit einem handelsüblichen PVAC-Leim (Holzleim der Fa. Geistlich) beidseitig vollflächig beschichtet. Die Kantenausbildung ist glattkantig. Auf die beschichteten Seiten werden Papiere mit einem Flächengewicht von ca. 250 g (Fa. BauschLinnemann Typ Tecofoil B) belegt. Die belegte Platte wird nun einer Flächenpresse zugeführt und unter Einhaltung der Dicke, des Flächendrucks und der Temperatur für ca. 30 sec. gepresst, vgl. Fig. 1. Die fertig verpresste, kaschierte Platte wird nun mit einer Kantenprofilieranlage rundum mit Nut und Feder (Kamm) ausgestattet, vgl. Fig. 2.

### 2. Beispiel: Herstellen einer inneren Dachverkleidung.

Die Dämmplatte gemäss Beispiel 1 wird am Sparren befestigt, hierfür werden phosphatierte Grobgewindeschrauben mit Trompetenkopf oder verzinkte Klammern mit einer Rückenbreite von ca. 10 mm verwendet. Die Nut- und Federverbindung lässt eine fortlaufende Verlegung der Platte zu. Die Abstände der Befestigungsmittel untereinander betragen max. 150 mm. Der Randabstand der Befestigung zur Plattenkante liegt im Bereich von 50 mm. Anschlüsse an andere Bauteile und Übergänge von Platte zu Platte, z.B. am Dachknick oder in der Fläche an der Nut- und Federverbindung, sind entsprechend den anerkannten Regeln der Technik luftdicht ausgeführt, vgl. Fig. 4. Die fertig montierten Platten bilden die Basis für die Endbeschichtung gemäss Kundenwunsch. Es können Tapete, ein verputzte Oberfläche, Anstriche oder Fliesen direkt angebracht werden.

## Patentansprüche

1. Untergrundplatte (1) für das Anbringen von Putzbeschichtungen, und/oder Anstrichen und/oder Fliesen und geeignet für die Erstellung von Wänden, Decken- und Dachverkleidungen sowie Mauern und Stützen,
wobei diese Untergrundplatte eine Dämmplatte (1) ist, umfassend eine Trägerplatte (2), wobei
die Trägerplatte (2) eine ein- oder mehrschichtige Holzfaserplatte mit einer Dicke von 20 - 60 mm und eine Rohdichte von 160-250 kg/m³ ist; und wobei
zwei gegenüberliegende Kanten der Dämmplatte so ausgebildet sind, dass die eine mindestens eine Nut und die andere mindestens einen Kamm zum Eingriff in die Nut einer weiteren Dämmplatte aufweist,
**dadurch gekennzeichnet, dass**
die Untergrundplatte eine erste Beschichtung (3) und eine zweite Beschichtung (4) aufweist, wobei
die erste Beschichtung (3) und die zweite Beschichtung (4) jeweils aus einem mit duroplastischem Harz getränkten Papier mit einer Dicke von 0.1 - 1.6 mm und einem Flächengewicht von 120 - 360 g/m² besteht; und
die erste und die zweite Beschichtung (3 und 4) auf den gegenüberliegenden Flächen der Trägerplatte stoffschlüssig verbunden sind und die Flächen der Trägerplatte (2) vollständig bedecken.

2. Untergrundplatte nach Anspruch 1, wobei die erste und die zweite Beschichtung auf den gegenüberliegenden Flächen der Trägerplatte stoffschlüssig jeweils mittels einer Klebschicht, insbesondere einer PVAC enthaltenden Klebschicht, verbunden sind.

3. Untergrundplatte nach einem der vorgängigen Ansprüche mit einer Wärmeleitfähigkeit von weniger als 0,05 W/mK.

4. Untergrundplatte nach einem der vorgängigen Ansprüche, wobei besagte Beschichtungen aus einem Papier mit einem Flächengewicht von 240 - 260 g/m² bestehen.

5. Untergrundplatte nach einem der vorgängigen Ansprüche, wobei besagte Beschichtungen (2) und (3) aus dem gleichen Papier bestehen.

6. Untergrundplatte gemäss Anspruch 1, **dadurch gekennzeichnet, dass** sie zwei Kanten mit Nuten und zwei Kanten mit Kämmen aufweist, wobei die beiden Kanten mit Nuten aneinander stossende Kanten sind und die Kanten mit Kämmen aneinander stossende Kanten sind.

7. Untergrundplatte gemäss Anspruch 1 oder 6, **dadurch gekennzeichnet, dass** die Nuten und Kämme der Untergrundplatten derart gestaltet sind, dass die Kämme der einen Untergrundplatte in die Nuten einer identisch gestalteten Untergrundplatte dichtend eingreifen können.

8. Verfahren zur Herstellung einer Untergrundplatte (1) nach einem der Ansprüche 1 bis 7, umfassend die nachstehend genannten, aufeinander folgenden Schritte:
(Variante A)
▪ Bereitstellen einer Trägerplatte (1);
▪ Aufkaschieren einer ersten Papierschicht (2) auf eine erste Fläche dieser Trägerplatte; nachfolgend
▪ Aufkaschieren einer zweiten Papierschicht (3) auf die gegenüberliegende Fläche der teilweise kaschierten Trägerplatte;
▪ ggf. Zuschneiden der zweiseitig kaschierten Trägerplatte;
▪ ggf. Erstellen eines Kantenprofils aus Nut und Kamm;
oder (Variante B)
▪ Bereitstellen einer Trägerplatte (1);
▪ Gleichzeitiges Aufkaschieren einer ersten Papierschicht (2) und einer zweiten Papierschicht (3) auf die gegenüberliegenden Flächen der Trägerplatte; nachfolgend
▪ ggf. Zuschneiden der zweiseitig kaschierten Trägerplatte;
▪ ggf. Erstellen eines Kantenprofils aus Nut und Kamm.

9. Verfahren gemäss Anspruch 8, in welchem alle Schritte kontinuierlich durchgeführt werden.

10. Verwendung einer Untergrundplatte nach einem der Ansprüche 1 bis 7
▪ als innenseitige Verkleidung eines Schrägdachs;
▪ als Verkleidung einer Trennwand;
▪ als Verkleidung eines Trempels;
▪ als Innendämmung der Aussenwand eines Gebäudes;
▪ als Akustikplatte;
▪ als Basisplatte für den Holzausbau;
▪ als Sandwichplatte für den Fahrzeugbau, insbesondere als Platte für den Ausbau von Caravans und / oder geschlossenen Anhängern.

11. Bauelement oder Fahrzeug, umfassend eine Vielzahl von Untergrundplatten nach einem der Ansprüche 1 - 7 und ggf. Verbindungsmaterial.

## Claims

1. Base board (1) for the application of plaster and/or paint and/or tiles and suitable for the preparation of interior walls, ceiling and roof cladding as well as external walls and beams, wherein said base board is an insulation board (1), comprising a support board (2), wherein the support board (2) is a single or multi-layered fibreboard with a thickness of 20 - 60 mm and a bulk density of 160 - 250 kg/m³, and wherein two opposite edges of the insulation board are designed so that one edge has at least one groove and the other edge has at least one ridge for engaging in the groove of another insulation board, **characterised in that** the base board has a first coating (3) and a second coating (4), wherein the first coating (3) and the second coating (4) are each made from paper impregnated with thermosetting resin with a thickness of 0.1 - 1.6 mm and a grammage of 120- 360 g/m², and the first and second coating (3 and 4) are joined in a material-bonded manner on opposite surfaces of the support board and completely cover the surfaces of the support board (2).

2. Base board according to claim 1, wherein the first and the second coating are joined in a material-bonded manner on opposite surfaces of the support board by means of an adhesive layer, in particular an adhesive layer containing PVAC.

3. Base board according to any of the preceding claims with a thermal conductivity of less than 0.05 W/mK.

4. Base board according to any of the preceding claims, wherein said coatings are made from paper with a grammage of 240 - 260 g/m².

5. Base board according to any of the preceding claims, wherein said coatings (2) and (3) are made from the same paper.

6. Base board according to claim 1, **characterised in that** it has two edges with grooves and two edges with ridges, wherein the two edges with grooves are abutting edges and the edges with ridges are abutting edges.

7. Base board according to claim 1 or 6, **characterised in that** the grooves and the ridges of the base boards are configured such that the ridges of one base board can engage in a sealing manner in the grooves of an identically configured base board.

8. Method for producing a base board (1) according to any of claims 1 to 7, comprising the following consecutive steps given below:
(variant A)
▪ providing a support board (1),
▪ laminating a first paper layer (2) onto a first surface of said support board, then
▪ laminating a second paper layer (3) onto the opposite surface of the partly laminated support board,
▪ if necessary cutting to size the support board laminated on two sides, if necessary creating an edge profile from the groove and ridge,
or (variant B)
▪ providing a support board (1),
▪ simultaneously laminating a first paper layer (2) and a second papier layer (3) on opposite surfaces of the support board, then
▪ if necessary cutting to size the support plate laminated on both sides,
▪ if necessary creating an edge profile from the groove and ridge.

9. Method according to claim 8, wherein all of the steps are carried out continuously.

10. Use of a base board according to any of claims 1 to 7
▪ as inner cladding of a pitched roof,
▪ as cladding of a dividing wall,
▪ as cladding of a knee wall,
▪ as interior insulation of the external wall of a building,
▪ as an acoustic panel,
▪ as a base panel for wooden interiors,
▪ as a sandwich board for vehicle construction, in particular as a panel for building caravans and/or closed trailers.

11. Structural element or vehicle, comprising a plurality of base boards according to any of claims 1 to 7 and if necessary joining material.

## Revendications

1. Panneau de fond (1) pour l'application d'enduits et/ou de peintures et/ou de carreaux et adapté à la construction de murs, d'habillages de plafond et de toiture ainsi que de murs et de piliers,
lequel panneau de fond est un panneau isolant (1) comprenant un panneau porteur (2), lequel panneau porteur (2) est un panneau de fibres de bois mono- ou multicouche ayant une épaisseur de 20 à 60 mm et une masse volumique de 160 à 250 kg/m³ ; et dans lequel deux bords opposés du panneau isolant sont réalisés de telle sorte que l'un présente au moins une rainure et l'autre au moins une crête pour l'engagement dans la rainure d'un autre panneau isolant,
**caractérisé en ce que**
le panneau de fond présente un premier revêtement (3) et un second revêtement (4), le premier revêtement (3) et le second revêtement (4) étant constitués chacun d'un papier imprégné de résine thermodurcissable ayant une épaisseur de 0,1 à 1,6 mm et une masse surfacique de 120 à 360 g/m² ; et
les premier et second revêtements (3 et 4) étant fixés par liaison de matière sur les surfaces opposées du panneau porteur et recouvrant complètement les surfaces du panneau porteur (2).

2. Panneau de fond selon la revendication 1, dans lequel les premier et second revêtements sont chacun fixés par liaison de matière sur les surfaces opposées du panneau porteur au moyen d'une couche adhésive, en particulier d'une couche adhésive contenant du PVAC.

3. Panneau de fond selon l'une des revendications précédentes, présentant une conductivité thermique inférieure à 0,05 W/mK.

4. Panneau de fond selon l'une des revendications précédentes, dans lequel lesdits revêtements sont constitués d'un papier ayant une masse surfacique de 240 à 260 g/m².

5. Panneau de fond selon l'une des revendications précédentes, dans lequel lesdits revêtements (2) et (3) sont constitués du même papier.

6. Panneau de fond selon la revendication 1, **caractérisé en ce qu'**il présente deux bords munis de rainures et deux bords munis de crêtes, les deux bords munis de rainures étant des bords jointifs et les bords munis de crêtes étant des bords jointifs.

7. Panneau de fond selon la revendication 1 ou 6, **caractérisé en ce que** les rainures et les crêtes des panneaux de fond sont conçues de telle sorte que les crêtes d'un panneau de fond peuvent s'engager de manière étanche dans les rainures d'un panneau de fond de forme identique.

8. Procédé de fabrication d'un panneau de fond selon l'une des revendications 1 à 7, comprenant les étapes successives indiquées ci-dessous :
(variante A)
▪ fourniture d'un panneau porteur (1) ;
▪ contrecollage d'une première couche de papier (2) sur une première surface de ce panneau porteur ; ensuite
▪ contrecollage d'une seconde couche de papier (3) sur la surface opposée du panneau porteur partiellement contrecollé ;
▪ le cas échéant, coupe à dimension du panneau porteur contrecollé sur deux faces ;
▪ le cas échéant, réalisation d'un profil de bord constitué d'une rainure et d'une crête ;
ou (variante B)
▪ fourniture d'un panneau porteur (1) ;
▪ contrecollage simultané d'une première couche de papier (2) et d'une seconde couche de papier (3) sur les surfaces opposées du panneau porteur ; ensuite
▪ le cas échéant, coupe à dimension du panneau porteur contrecollé sur deux faces ;
▪ le cas échéant, réalisation d'un profil de bord constitué d'une rainure et d'une crête.

9. Procédé selon la revendication 8, dans lequel toutes les étapes sont effectuées en continu.

10. Utilisation d'un panneau de fond selon l'une des revendications 1 à 7
▪ comme habillage intérieur d'un toit en pente ;
▪ comme habillage d'une cloison ;
▪ comme habillage d'un mur de jambette ;
▪ comme isolation intérieure du mur extérieur d'un bâtiment ;
▪ comme panneau acoustique ;
▪ comme panneau de base pour la construction en bois ;
▪ comme panneau sandwich pour la construction de véhicules, en particulier comme panneau pour l'aménagement de caravanes et/ou de remorques fermées.

11. Élément de construction ou véhicule, comprenant une pluralité de panneaux de fond selon l'une des revendications 1 à 7 et, le cas échéant, du matériel d'assemblage.
